# EUROPÄISCHE PATENTSCHRIFT

(11) **EP 1 434 697 B1**
(45) Veröffentlichungstag und Bekanntmachung des Hinweises auf die Patenterteilung: **13.07.2005**
(21) Anmeldenummer: 02774588.4
(22) Anmeldetag: 10.09.2002
(51) Int. Cl.: B60C 17/04, B21D 53/26

(54) **VERFAHREN ZUM HERSTELLEN EINES NOTLAUF-STÜTZKÖRPERS FÜR NOTLAUF-FAHRZEURGRÄDER**
METHOD FOR PRODUCING A RUN-FLAT SUPPORT BODY FOR RUN-FLAT VEHICLE WHEELS
PROCEDE DE PRODUCTION D'UN CORPS D'APPUI DE SECOURS POUR ROUES DE SECOURS DE VEHICULES

(30) Priorität: 05.10.2001 DE 10149086
(43) Veröffentlichungstag der Anmeldung: 07.07.2004
(73) Patentinhaber: ISE Innomotive Systems Europe GmbH, 51702 Bergneustadt (DE)
(72) Erfinder: LÖWEN, Jakob, 51647 Gummersbach (DE); KOCH, Meinolf, 51702 Bergneustadt (DE); KULMANN, Ralf, 57462 Olpe-Rehringhausen (DE); REUBER, Christian, 57489 Drolshagen (DE); MAIWALD, Lutz, 51702 Bergneustadt (DE)
(74) Vertreter: Fuchs Mehler Weiss & Fritzsche
(86) Internationale Anmeldenummer: PCT/EP2002/010115
(87) Internationale Veröffentlichungsnummer: WO 2003/031209

(56) Entgegenhaltungen:
- EP-A- 0 980 771

## Beschreibung

Die Erfindung bezieht sich auf ein Verfahren zum Herstellen eines Notlauf-Stützkörpers in Form eines schalenförmigen, metallischen Ringkörpers mit gewellter Stütz-Ringfläche für Notlauf-Fahrzeugräder.

Die Autoindustrie, insbesondere zuliefernde Reifen- und Felgenhersteller, arbeiten intensiv an dem Problem, luftbereifte Fahrzeugräder für Kraftfahrzeuge, sogenannte Notlaufräder zu entwickeln, die bei Luftverlust für eine vorgegebene Fahrstrecke, wenn auch geschwindigkeitsmäßig eingeschränkt, fahrfähig bleiben. Derartige Notlaufräder weisen typischerweise innerhalb des auf der Radfelge befestigten Luftreifens einen sogenannten Notlaufstützkörper auf, der als schalenförmiger Ringkörper innerhalb des Luftreifens ausgebildet ist, welcher eine den Reifen im Schadensfall abstützende Notlauffläche aufweist und sich mit seinen beiden axial äußeren Wandungsbereichen über ringförmige Stützelemente auf der Radfelge abstützt.

Ein derart ausgebildetes Notlaufrad wird in der DE 197 07 090 A1 und DE 197 45 409 A1 beschrieben. Die EP-A-980 771 offenbart ein Verfahren zum Herstellen eines geschlitzten Ringkörpers für Notlauf-Fahrzeugrüder, ausgehend von einer ringförmigen metallischen Ronde. Dieses Verfahren ist als nächstliegender Stand der Technik anzusehen.

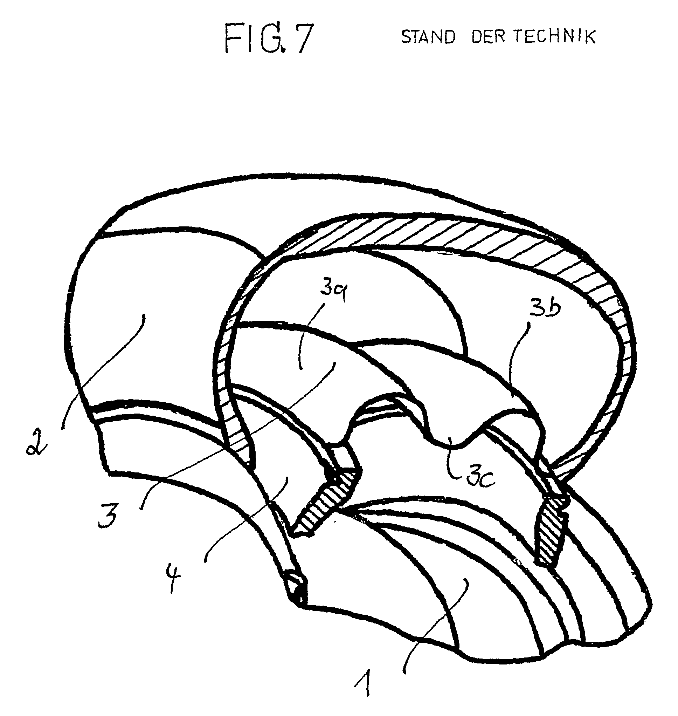

Im bekannten Fall besitzt der metallische schalenförmige Ringkörper eine gewellte Notlauffläche mit im Querschnitt zwei vorstehenden Wulsten und einer mittigen wulstförmigen Absenkung. Ein so ausgebildetes Notlaufrad ist in Fig. 7 dargestellt. Diese Figur zeigt in einer perspektivischen Ausschnitt-Darstellung ein aufgeschnittenes Notlaufrad mit einer Felge 1, auf der ein schlauchloser Reifen 2 aufgezogen ist. Auf der Felge ist weiterhin ein metallischer, schalenförmiger Ringkörper 3 über ringförmige elastomere Stützkörper 4 gehaltert.

Der schalenförmige Ringkörper 3, dessen Außenseite bei Luftverlust im Reifen die Notlauffläche bildet, weist drei Ringwulste 3 a, 3 b, 3 c auf, von denen zwei 3 a, 3 b radial vorstehen und der dritte 3 c radial nach innen gekehrt ist.

Ein derartiger Notlauf-Stützkörper ausgebildet als schalenförmiger, geschlossener Ringkörper mit gewellter Notlauffläche, der in den Reifen und mit dem Reifen auf die Felge montierbar sein muß, ist nicht ohne weiteres herstellbar.

Der Erfindung liegt die Aufgabe zugrunde, ein effektives und dabei relativ einfaches Verfahren zum Herstellen eines derartigen Notlauf-Stützkörpers zu schaffen.

Die Lösung dieser Aufgabe gelingt gemäß der Erfindung durch ein Verfahren zum Herstellen eines Notlauf-Stützkörpers in Form eines schalenförmigen, metallischen Ringkörpers mit gewellter Stütz-Ringfläche für Notlauf-Fahrzeugräder, mit den Schritten:
- Bereitstellen einer rechteckigen metallischen Platine mit einer Längsseite, die auf den Umfang des Ringkörpers abgestellt ist und einer Schmalseite, die auf die Breite des Ringkörpers abgestellt ist,
- Rundbiegen der metallischen Platine über die Längsseite zu einem offenen Ring,
- Verschweißen der Enden des offenen Ringes unter Bildung eines geschlossenen Ringrohlings,
- Profilieren der Ringfläche umlaufend mit einem querschnittlichen Wellenprofil durch ein Druck-Rollverfahren,
- Anbringen von stirnseitig gegenüberliegenden trennbar miteinander verbindbaren Verbindungselementen am profilierten Ringrohling, und
- Aufschneiden des profilierten Ringrohlings zwischen den Verbindungselementen unter Erzeugung des montierbaren, schalenförmigen Ringkörpers mit gewellter Stütz-Ringfläche.

Durch die erfindungsgemäßen Schritte läßt sich auf wirtschaftliche Weise der Notlauf-Stützkörper für Notlauf-Fahrzeugräder herstellen.

Das Bereitstellen der Rechteckplatine kann auf einfache Weise dadurch erfolgen, daß die rechteckige Platine jeweils fortlaufend von einem Metallband, das auf einer Vorratsrolle aufgewickelt ist, abgelängt wird, wobei vorzugsweise das Ablängen der Platine durch Laserstrahlschneiden erfolgt. Alternativ dazu kann die rechteckige Platine auch aus einer Blechtafel geschnitten werden. Dabei kann der Trennvorgang auch durch Ausstanzen erfolgen.

Um einerseits das Gewicht möglichst gering zu halten und um andererseits die nicht unerheblichen Kräfte beim Abrollen des Fahrzeugrades im Notlauffall wirksam auffangen zu können, sieht eine Ausgestaltung der Erfindung vor, daß als Material für das Metallband ein hochfestes Stahlblech verwendet wird.

Das Verschweißen der Enden der rundgebogenen Platine kann prinzipiell nach einem der bekannten Schweißverfahren erfolgen. Im Interesse eines sehr dehnungsfähigen Schweißnahtbereiches wird das Verfahren vorzugsweise so geführt, daß das Verschweißen der Enden des offenen Ringes zu einem geschlossenen Ringrohling durch Laserschweißen erfolgt. Auch das Plasma-WIG-Schweißen kann mit Erfolg eingesetzt werden.

Besondere Vorteile werden erzielt, wenn das Druck-Rollverfahren als zweistufiges Verfahren durchgeführt wird, mit einer ersten Stufe, in welcher die Ringfläche des Ringrohlings mit dem Wellenprofil versehen wird, und mit einer zweiten Stufe, in welcher der Durchmesser der beiden Randbereiche des profilierten Ringes verringert wird.

Durch das Aufteilen der Kalt-Umformung des Ringrohlings werden insbesondere auch die inneren Spannungen, die der Ringrohling nach der ersten Stufe aufweist, in der zweiten Stufe ins Gleichgewicht gebracht.

Dabei wird gemäß Ausgestaltungen der Erfindung das Verfahren so geführt, daß in der ersten Stufe ein rotationssymmetrischer Profilkörper, der am äußeren Umfang das geforderte Wellenprofil trägt, radial von innen gegen die Ringfläche des an den Rändern drehend eingespannten Ringrohlings gedrückt wird unter gleichzeitiger Aufbringung einer axialen Kraft, und daß der in der ersten Stufe mit dem Wellenprofil versehene Ringkörper auf einen zweiten Wellen-Profilkörper drehend aufgespannt wird und die Randbereiche des Ringkörpers mittels zweier scheibenförmiger Rollen im Durchmesser reduzierend umgeformt werden.

Durch diese Verfahrensführung ist fertigungstechnisch lediglich eine relativ einfach aufgebaute Anlage notwendig.

Das Anbringen der Verbindungselemente auf den profilierten Ring kann mit bekannten Methoden erfolgen. Es hat sich fertigungstechnisch als günstig erwiesen, wenn die Verbrennungselemente durch Widerstandsschweißen auf dem Ringkörper befestigt werden.

Auch das Aufschneiden des Ringes nach erfolgter Anbringung der Verbindungselemente kann prinzipiell mit irgendeiner der bekannten Methoden erfolgen. Vorzugsweise erfolgt jedoch das Auftrennen des gewellten Ringes durch Laserschneiden.

Anhand eines in den Zeichnungen dargestellten Ausführungsbeispieles wird die Erfindung näher beschrieben.

Es zeigen:
- Fig. 1: in einer schematischen Darstellung den prinzipiellen Ablauf des erfindungsgemäßen Verfahrens zur Herstellung eines als Notlauf-Stützkörper dienenden Ringes mit einem zweistufigen Drück-Rollverfahrensschritt,
- Fig. 2: in zwei Figurenteilen A, B den prinzipiellen Aufbau einer Vorrichtung zum Profilieren des Ringes in der ersten Stufe des Drück-Rollverfahrensschrittes,
- Fig. 3: in einer perspektivischen Ansicht den inneren Aufbau einer Vorrichtung zur Durchführung der ersten Stufe des Drück-Rollverfahrens ohne aufgespannten, zu profilierenden Ring,
- Fig. 4: die Vorrichtung nach Fig. 3, jedoch mit aufgespanntem Ring während seiner Umformung,
- Fig. 5: in zwei Figurenteilen A, B den prinzipiellen Aufbau einer zweiten Vorrichtung zur Durchführung der zweiten Stufe des Drück-Rollverfahrens zur Reduzierung des Durchmessers der Randbereiche des in der ersten Stufe profilierten Ringes,
- Fig. 6: in einer konkretisierten, perspektivischen Darstellung die Vorrichtung nach Fig. 5, und
- Fig. 7: in einer perspektivischen Ausschnitt-Darstellung den bekannten inneren Aufbau eines Notlauf-Fahrzeugrades.

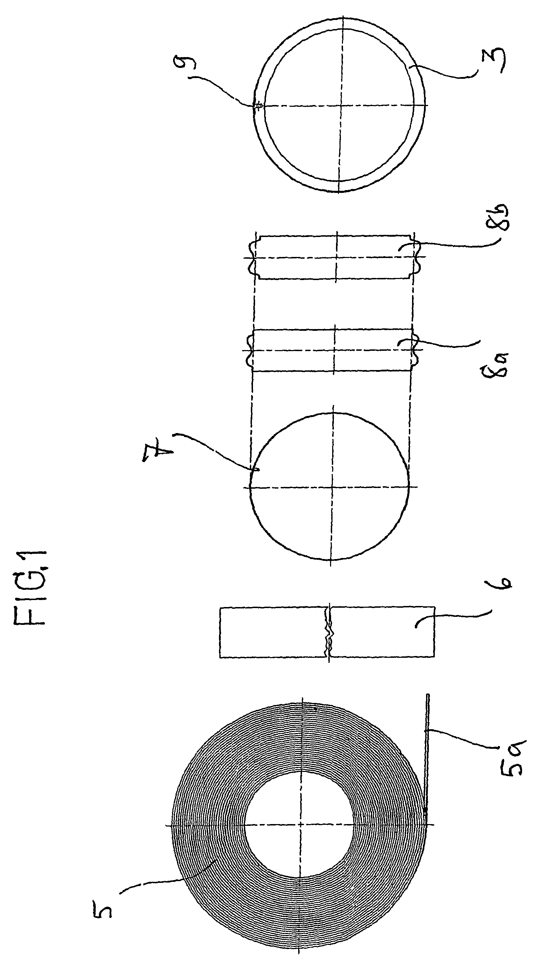

In der Fig. 1 ist der prinzipielle Ablauf des erfindungsgemäßen Verfahrens zum Herstellen eines Notlauf-Stützkörpers in Form eines schalenförmigen Ringkörpers mit gewellter Stütz-Ringfläche für Notlauf-Fahrzeugräder schematisch dargestellt.

Von einer Vorrats-Rolle 5, auf der ein Metallband 5 a aufgewickelt ist, wird eine Rechteckplatine 6 abgelängt, vorzugsweise durch Laserstrahl-Schneiden. Es können prinzipiell auch andere bekannte, beispielsweise mechanisch wirkende Schneidverfahren verwendet werden. Nach dem Laserschneiden der Rechteckplatine 6 wird diese auf einer Drei-Rollen-Biegemaschine zu einem offenen Ring rundgebogen. Danach werden die Enden miteinander laserverschweißt, so daß man einen geschlossenen Ring 7 erhält. Dieser Ring 7 wird dann in zwei Stufen 8 a, 8 b durch ein Drück-Rollverfahren profiliert, d.h. mit der gewellten Stütz-Ringfläche versehen.

Nach der Profilierung werden zwei Verbindungselemente 9 in dem Ring mittels Widerstandspunktschweißen befestigt und der Ring zwischen den Verbindungselementen durch Laserschneiden getrennt, damit der so ausgebildete, endgültige Ring 3 für die Montage in den Reifen bzw. auf die Felge geöffnet werden kann.

Um die notwendige Stabilität und Festigkeit des Rings 3 bei möglichst geringem Gewicht zu erreichen, wird als metallisches Ausgangsmaterial 5 a ein hochfestes Blech verwendet.

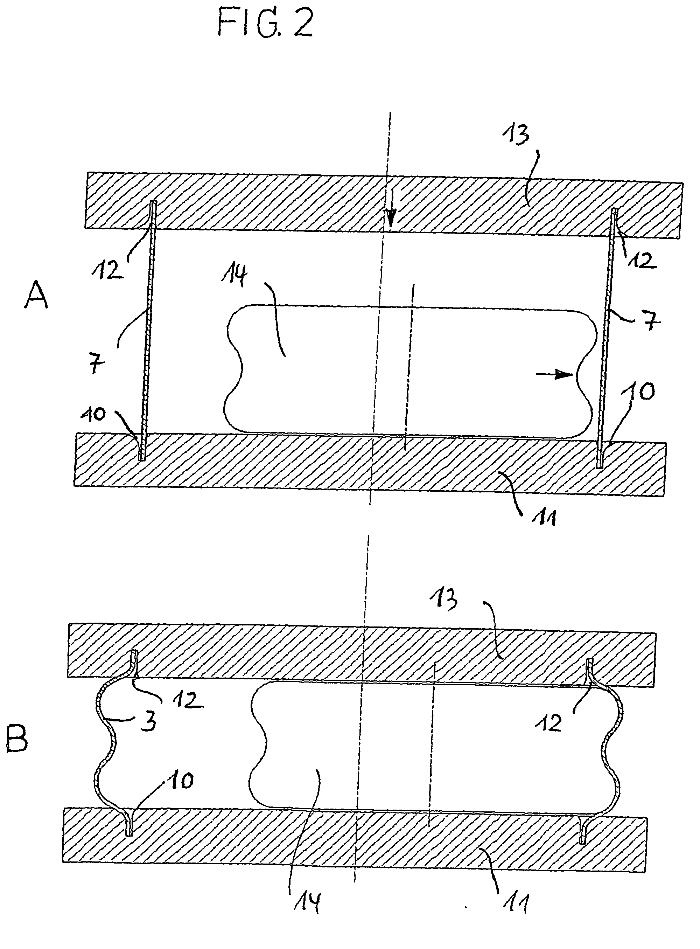

Eine zentrale fertigungstechnische Bedeutung kommt dem wellenförmigen Profilieren des geschlossenen Ringes 7 des Ringrohlings, in den beiden Verfahrensstufen 8 a , 8 b zu. Dieses Profilieren wird anhand der Figuren 2 bis 6 nunmehr näher beschrieben.

In der 1. Stufe 8 a wird, wie die Fig. 2 im Teil schematisch zeigt, der Ringrohling 7 in horizontaler Lage mit der unteren Kante in eine AufnahmeNut 10 einer horizontal kugelgelagerten Platte 11 eingelegt, die durch an Böcken 11 a gelagerte Rollen 11 b niedergehalten wird. Die obere Kante des Ringrohlinges 7 wird in einer Ring-Nut 12 einer kugelgelagerten Glocke 13 gehalten. Diese Glocke 13 ist über einen Hydraulikzylinder 15 in Pfeilrichtung vertikal verfahrbar. Innerhalb des Ringrohlings 7 ist eine über einen ebenfalls nicht dargestellten Getriebemotor angetriebene Profilrolle 14 installiert. Die gesamte Antriebseinheit mit der Profilrolle ist über einen eigenen nicht dargestellten Hydraulikzylinder 15 radial zum Ringrohling in Pfeilrichtung verschiebbar.

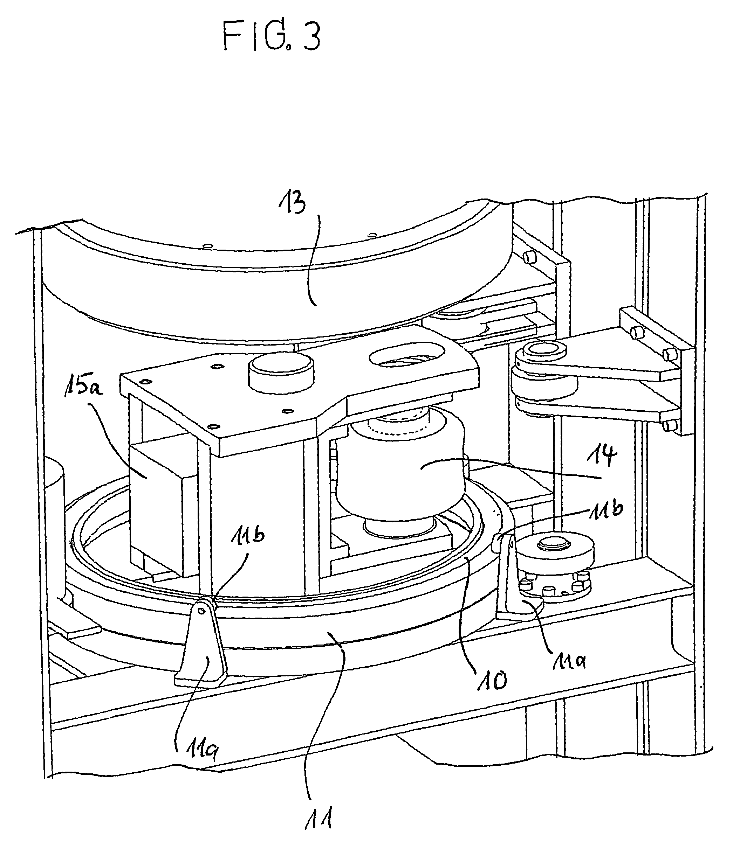

Der innere Aufbau der in Fig. 2 A nur schematisch dargestellten Vorrichtung ist aus der perspektivischen Darstellung nach Fig. 3 ersichtlich, die die Vorrichtung ohne den eingelegten Ringrohling zeigt.

Die Profilrolle 14 besitzt an ihrem Umfang die Wellenstruktur, die es mit einer Drück-Rollumformung in den Ringrohling 7 zu übertragen gilt. Dazu wird, während der Ringrohling 7 mit seinen Aufnahmen 11, 13 über einen separaten Antrieb in Rotation versetzt wird, die Profilrolle durch eine Steuerung von innen gegen den Blech-Ringrohling gedrückt, so daß das Profil der Rolle auf den Blechring 7 übertragen wird, wobei der Durchmesser des Rings sich vergrößert. Um die Umformung des Ringrohlings zu unterstützen, wird durch den oberen Hydraulikzylinder eine axiale Kraft über die Glocke 13 auf den Ringrohling ausgeübt.

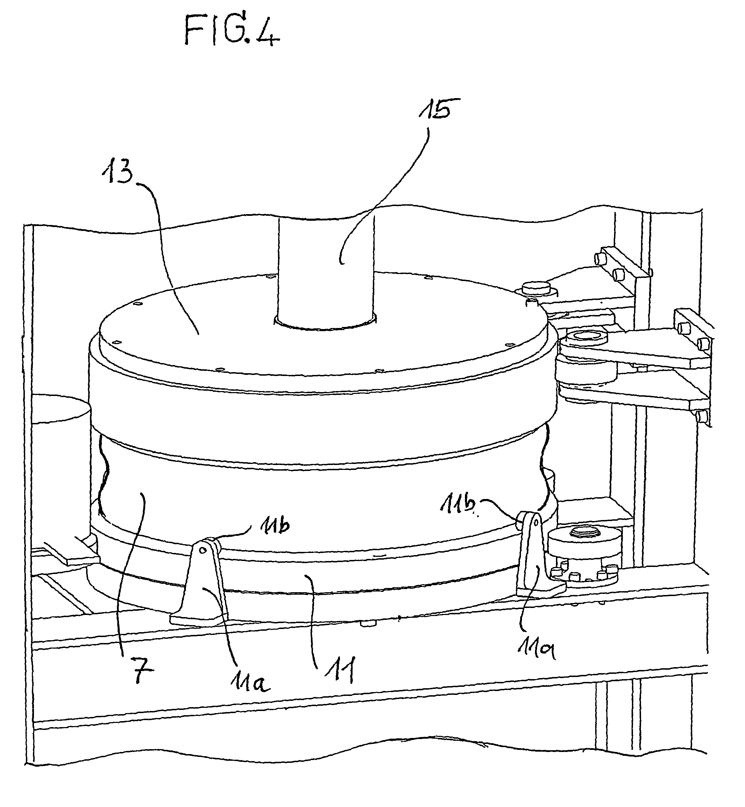

In der Fig. 2 B ist dieser Zustand schematisch dargestellt. Den Zustand der Vorrichtung nach Fig. 3 während der Umformung zeigt die Darstellung nach Fig. 4.

In der zweiten Stufe 8 b nach Fig. 1 werden die beiden Randbereiche des profilierten Ringes 7, die später zur Aufnahme der Gummi-Stützfüße nach der Fig. 7 dienen, im Durchmesser verkleinert.

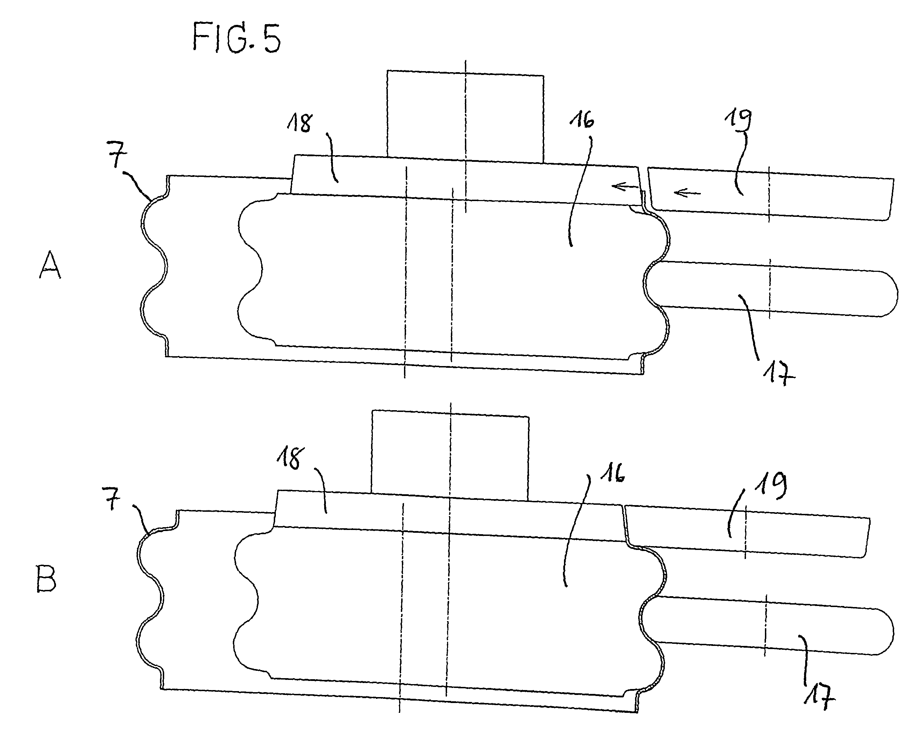

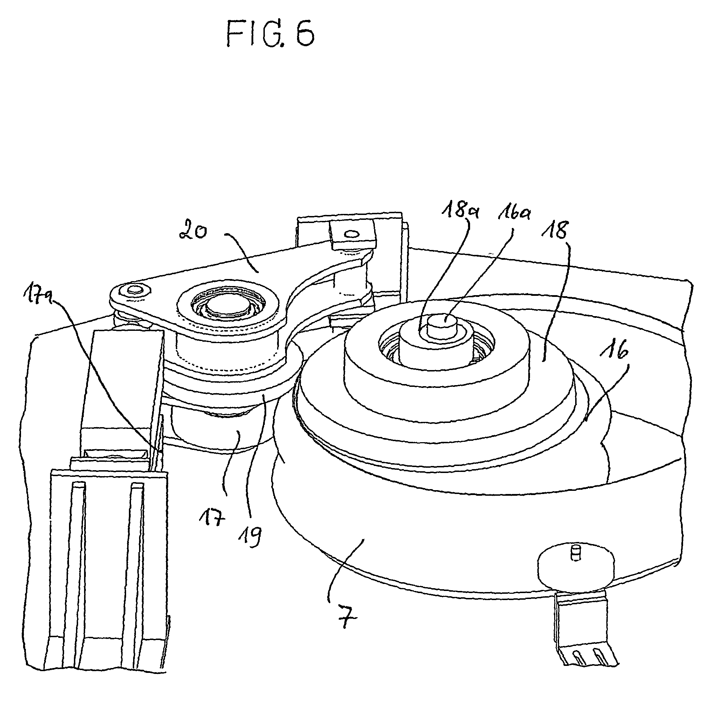

Diese zweite Stufe ist im Ablauf schematisch in Fig. 5 und vorrichtungsmäßiger in Fig. 6 dargestellt.

Um die Reduzierung des Durchmessers der Randbereiche durchzuführen, wird der profilierte Ring 7 auf einer zweiten Maschine über eine im Durchmesser möglichst große Profilrolle 16 gelegt und an diese über eine scheibenförmige Rolle 17 mittels eines Hydraulikzylinders 17 a angedrückt. Die Profilrolle 16 wird dabei über einen Hydraulikmotor angetrieben.

Die eigentliche Umformung in der zweiten Stufe erfolgt zwischen zwei scheibenförmigen Rollen 18, 19. Die größere Rolle 18 ist frei drehbar über einen Exzenter 18 a außermittig auf der Welle 16 a der Profilrolle 16 gelagert. Die kleinere Rolle 19 ist auf gleicher Höhe außerhalb des Rings 7 an einem drehbar gelagerten Arm 20 befestigt.

Zwischen diesen beiden Rollen 18, 19 wird der Rand des Profilrings 7, der im Durchmesser verkleinert werden soll, eingeklemmt, und während sich der Profilring 7 dreht, werden die beiden Rollen 18, 19 in Pfeilrichtung Richtung Ringmittelpunkt bewegt. Damit der Rand des Profilringes ständig zwischen den Rollen 18, 19 festgeklemmt bleibt, wird die innere Rolle 18 über den Exzenter 18 a langsam nach innen bewegt, während die äußere Rolle 19 konstant durch einen Hydraulikzylinder nachgedrückt wird.

Durch diese zweistufige Umformung erhält man die geforderte Profilhöhe der Stütz-Ringfläche gemäß Figurenteil 5 B. Die zweistufige Umformung ist vor allem auch deshalb notwendig, weil der Ring nach der Umformung auf der ersten Maschine innere Spannungen hat, die ihn stark ineinander fallen lassen, wenn der Ring in der letzten Stufe nach Fig. 1 aufgetrennt wird. Durch das Aufteilen der Umformung auf die zwei Stufen werden die innere Spannungen im Ring ins Gleichgewicht gebracht.

## Patentansprüche

1. Verfahren zum Herstellen eines Notlauf-Stützkörpers in Form eines schalenförmigen, metallischen Ringkörpers (3) mit gewellter Stütz-Ringfläche für Notlauf-Fahrzeugräder, mit den Schritten:
- Bereitstellen einer rechteckigen metallischen Platine (6) mit einer Längsseite, die auf den Umfang des Ringkörpers (3) abgestellt ist und einer Schmalseite, die auf die Breite des Ringkörpers (3) abgestellt ist,
- Rundbiegen der metallischen Platine über die Längsseite zu einem offenen Ring,
- Verschweißen der Enden des offenen Ringes unter Bildung eines geschlossenen Ringrohlings (7),
- Profilieren der Ringfläche umlaufend mit einem querschnittlichen Wellenprofil durch ein Drück-Rollverfahren,
- Anbringen von stirnseitig gegenüberliegenden, trennbar miteinander verbindbaren Verbindungselementen (9) am profilierten Ringrohling (7), und
- Aufschneiden des Ringrohlings (7) zwischen den Verbindungselementen (9) unter Erzeugung des montierbaren, schalenförmigen Ringkörpers (3) mit gewellter Stütz-Ringfläche.

2. Verfahren nach Anspruch 1, **dadurch gekennzeichnet, daß** die rechteckige Platine (6) jeweils fortlaufend von einem Metallband (5 a), das auf einer Vorratsrolle (5) aufgewickelt ist, abgelängt wird.

3. Verfahren nach Anspruch 1, **dadurch gekennzeichnet, daß** die rechteckige Platine aus einer Blechtafel geschnitten wird.

4. Verfahren nach Anspruch 2 oder 3, **dadurch gekennzeichnet, daß** als Material für das Metallband oder die Blechtafel ein hochfestes Stahlblech verwendet wird.

5. Verfahren nach einem der Ansprüche 2 bis 4, **dadurch gekennzeichnet, daß** das Ablängen oder Schneiden der Platine (6) durch Laserstrahlschneiden erfolgt.

6. Verfahren nach einem der Ansprüche 2 bis 4, **dadurch gekennzeichnet, daß** das Ablängen oder Schneiden durch Ausstanzen erfolgt.

7. Verfahren nach einem der Ansprüche 1 bis 6, **dadurch gekennzeichnet, daß** das Verschweißen der Enden des offenen Ringes zu einem geschlossenen Ringrohling (7) durch Laserschweißen erfolgt.

8. Verfahren nach einem der Ansprüche 1 bis 4, **dadurch gekennzeichnet, daß** das Verschweißen der Enden des offenen Ringes zu einem geschlossenen Ringrohling durch Plasma-WIG-Schweißen erfolgt.

9. Verfahren nach einem der Ansprüche 1 bis 8, **dadurch gekennzeichnet, daß** das Druck-Rollverfahren als zweistufiges Verfahren durchgeführt wird, mit einer ersten Stufe (8 a), in welcher die Ringfläche des Ringrohlings (7) mit dem Wellenprofil versehen wird, und mit einer zweiten Stufe, in welcher der Durchmesser der beiden Randbereiche des profilierten Ringes verringert wird.

10. Verfahren nach Anspruch 9, **dadurch gekennzeichnet, daß** in der ersten Stufe ein rotationssymmetrischer Profilkörper (14), der am äußeren Umfang das geforderte Wellenprofil trägt, radial gegen die Ringfläche des an den Rändern drehend eingespannten Ringrohlings (7) gedrückt wird unter gleichzeitiger Aufbringung einer axialen Kraft.

11. Verfahren nach Anspruch 9 oder 10, **dadurch gekennzeichnet, daß** der in der ersten Stufe mit dem Wellenprofil versehene Ringkörper auf einen zweiten Wellen-Profilkörper (16) drehend aufgespannt wird und die Randbereiche des Ringkörpers mittels zweier scheibenförmiger Rollen (18, 19) im Durchmesser reduzierend umgeformt werden.

12. Verfahren nach einem der Ansprüche 1 bis 11, **dadurch gekennzeichnet, daß** die Verbindungselemente (9) durch WiderstandsPunktschweißen oder Buckelschweißen auf dem Ringkörper befestigt werden.

13. Verfahren nach einem der Ansprüche 1 bis 12, **dadurch gekennzeichnet, daß** das Aufschneiden des Ringrohlinges nach Anbringung der Verbindungselemente durch Laserschneiden erfolgt.

## Claims

1. Method for producing a run-flat support body in the form of a dish-shaped, metallic ring body (3) having a corrugated support ring surface for run-flat vehicle wheels, comprising the steps of:
- providing a rectangular metallic plate (6) having a longitudinal side which is adapted to the circumference of the ring body (3) and a narrow side which is adapted to the width of the ring body (3),
- bending the metallic plate in a circular manner over the longitudinal side to form an open ring,
- welding the ends of the open ring so as to form a closed ring blank (7),
- profiling the ring surface all-round with a cross-sectional corrugated profile by a roller spinning method,
- attaching connecting elements (9) to the profiled ring blank (7), which elements lie opposite one another at the front sides and can be separably connected together, and
- cutting open the ring blank (7) between the connecting elements (9) so as to produce the mountable, dish-shaped ring body (3) with corrugated support ring surface.

2. Method according to Claim 1, **characterised in that** the rectangular plate (6) is in each case continuously cut to length from a metal strip (5a) which is wound onto a supply roll (5).

3. Method according to Claim 1, **characterised in that** the rectangular plate is cut from a sheet metal panel.

4. Method according to Claim 2 or 3, **characterised in that** a high-strength steel sheet is used as the material for the metal strip or the sheet metal panel.

5. Method according to any one of Claims 2 to 4, **characterised in that** the plate (6) is cut to length or cut by laser-beam cutting.

6. Method according to any one of Claims 2 to 4, **characterised in that** the cutting to length or cutting takes place by blanking.

7. Method according to any one of Claims 1 to 6, **characterised in that** the ends of the open ring are welded to form a closed ring blank (7) by laser welding.

8. Method according to any one of Claims 1 to 4, **characterised in that** the ends of the open ring are welded to form a closed ring blank by plasma TIG welding.

9. Method according to any one of Claims 1 to 8, **characterised in that** the roller spinning method is carried out as a two-stage method, with a first stage (8a), in which the ring surface of the ring blank (7) is provided with the corrugated profile, and with a second stage, in which the diameter of the two edge regions of the profiled ring is reduced.

10. Method according to Claim 9, **characterised in that** in the first stage a rotationally symmetrical profiled body (14), which bears the required corrugated profile at the outer circumference, is pressed radially against the ring surface of the ring blank (7), which is rotatably clamped at the edges, while simultaneously applying an axial force.

11. Method according to either Claim 9 or Claim 10, **characterised in that** the ring body provided with the corrugated profile in the first stage is rotatably mounted on a second corrugated profiled body (16) and the edge regions of the ring body are worked so as to reduce the diameter by means of two disc-shaped rolls (18, 19).

12. Method according to any one of Claims 1 to 11, **characterised in that** the connecting elements (9) are fastened to the ring body by resistance spot welding or projection welding.

13. Method according to any one of Claims 1 to 12, **characterised in that** the ring blank is cut open after attaching the connecting elements by laser cutting.

## Revendications

1. Procédé de fabrication d'un élément de support de fonctionnement en cas d'urgence sous la forme d'un corps annulaire métallique (3) en forme de coque avec une surface annulaire d'appui ondulée pour roues de véhicules de fonctionnement en cas d'urgence, avec les étapes suivantes :
- mise à disposition d'un larget métallique rectangulaire (6) avec un côté longitudinal ajusté à la périphérie du corps annulaire (3), et avec un côté étroit ajusté à la largeur du corps annulaire (3),
- cintrage du larget métallique via le côté longitudinal pour former un anneau ouvert,
- soudage des extrémités de l'anneau ouvert en formant une ébauche annulaire fermée (7),
- profilage de la surface annulaire de manière circulaire avec un profil ondulé en coupe transversale grâce à un procédé de pression-roulage,
- ajout d'éléments de liaison (9) situés en vis-à-vis du côté frontal et pouvant être reliés de manière séparable, sur l'ébauche annulaire profilée (7), et
- ouverture par découpage de l'ébauche annulaire (7) entre les éléments de liaison (9) en générant le corps annulaire en forme de coque (3) pouvant être monté, avec une surface annulaire d'appui ondulée.

2. Procédé selon la revendication 1, **caractérisé en ce que** le larget rectangulaire (6) est respectivement tronçonné en continu à partir d'un feuillard métallique (5a) enroulé sur un cylindre d'alimentation (5).

3. Procédé selon la revendication 1, **caractérisé en ce que** le larget rectangulaire est découpé dans une feuille de tôle.

4. Procédé selon les revendications 2 ou 3, **caractérisé en ce qu'**en guise de matériau pour le feuillard métallique ou la feuille de tôle, on utilise une tôle extrêmement solide.

5. Procédé selon l'une quelconque des revendications 2 à 4, **caractérisé en ce que** le tronçonnage ou le découpage du larget (6) s'effectue par découpage au laser.

6. Procédé selon l'une quelconque des revendications 2 à 4, **caractérisé en ce que** le tronçonnage ou le découpage s'effectue par estampage.

7. Procédé selon l'une quelconque des revendications 1 à 6, **caractérisé en ce que** le soudage des extrémités de l'anneau ouvert pour former une ébauche annulaire fermée (7) s'effectue par soudage au laser.

8. Procédé selon l'une quelconque des revendications 1 à 4, **caractérisé en ce que** le soudage des extrémités de l'anneau ouvert pour former une ébauche annulaire fermée s'effectue par soudage à l'arc TIG au plasma.

9. Procédé selon l'une quelconque des revendications 1 à 8, **caractérisé en ce que** le processus de pression-roulage est réalisé en tant que processus en deux étapes, avec une première étape (8a) au cours de la quelle la surface annulaire de l'ébauche annulaire (7) est pourvue du profil ondulé, et avec une deuxième étape au cours de laquelle on réduit le diamètre des deux zones du bord de l'anneau profilé.

10. Procédé selon la revendication 9, **caractérisé en ce qu'**au cours de la première étape, un corps profilé (14) en symétrie de rotation, lequel porte le profil ondulé requis sur la périphérie extérieure, est pressé radialement contre la surface annulaire de l'ébauche annulaire (7) montée de manière rotative sur les bords, tout en produisant simultanément une force axiale.

11. Procédé selon les revendications 9 ou 10, **caractérisé en ce que** le corps annulaire pourvu du profil ondulé au cours de la première étape, est fixé de manière rotative sur un deuxième corps profilé ondulé (16), et **en ce que** les zones du bord du corps annulaire sont transformées pour réduire leur diamètre à l'aide de deux cylindres en forme de disque (18, 19).

12. Procédé selon l'une quelconque des revendications 1 à 11, **caractérisé en ce que** les éléments de liaison (9) sont fixés sur le corps annulaire à l'aide d'un soudage par points indirects par résistance ou un soudage par bossages indirect.

13. Procédé selon l'une quelconque des revendications 1 à 12, **caractérisé en ce que** l'ouverture par découpage de l'ébauche annulaire s'effectue après l'ajout des éléments de liaison par découpage au laser.
